# EUROPEAN PATENT APPLICATION

(11) **EP 4 462 730 A1**
(43) Date of publication of application: **13.11.2024**
(21) Application number: 23172198.6
(22) Date of filing: 09.05.2023
(51) Int. Cl.: H04L 9/40, H04L 67/12

(54) **METHOD FOR TOKEN MANAGEMENT FOR A VEHICLE SERVICE, COMPUTER PROGRAM, AND SERVER**

(71) Applicant: Bayerische Motoren Werke Aktiengesellschaft, 80809 München (DE)
(72) Inventor: Voth, Andreas, 85221 Dachau (DE); Deng, Zian, 80807 München (DE); Jodl, Wolfgang, 85653 Aying (DE); Priewasser, Daniel, 5282 Ranshofen (AT)

(57) **Abstract**

Managing authentication related tokens for a personalized service (450) of a vehicle (100) comprising: receiving (1100), from a vehicle-specific gateway (200) with a first request management component (210) and with a second request management component (220) each for managing a vehicle request (151, 152) with a token, a token relating to the vehicle (100) and according to a first token type (161) or according to a second token type (162); identifying (1200), by a token identifier (321) of an API gateway (320) of the server (300), a token type (160) of the token as being the first token type (161) or the second token type (162); and transmitting (1300), from the token identifier (321), an access information (330) relating to access to the service (450) to a first data management backend (315) or to a second data management backend (355), based on the token type (160) of the token.

## Description

The present disclosure relates to a method for a server for managing authentication related tokens for a personalized service of a vehicle. The disclosure also relates to a computer program and to a server for managing authentication related tokens for a personalized service of a vehicle.

To access personalized services for a vehicle, e.g., to perform personalization of the vehicle and/or of features of the vehicle, to charge the optionally electrically propelled vehicle and/or to access a parking space, an authentication of a user of the vehicle, e.g., a driver of the vehicle, a user group, a user device and/or an application, may be required.

The authentication of the user, the user group, the user device and/or the application may be assessed by the use of tokens. The token may be compared with an entry in an authentication database to grant or deny access to the service.

However, the management of tokens and thus the access of services may be performed in different and potentially incompatible manners.

For example, "The OAuth 2.0 Authorization Framework" as published by the Internet Engineering Task Force (IETF) in October 2012 enables a third-party application to obtain limited access to an HTTP service, either on behalf of a resource owner by orchestrating an approval interaction between the resource owner and the HTTP service, or by allowing the third-party application to obtain access on its own behalf. Further, "The OAuth 2.0 Authorization Framework: Bearer Token Usage" as published by the Internet Engineering Task Force (IETF) in October 2012 describes how to use bearer tokens in HTTP requests to access OAuth 2.0 protected resources. Any party in possession of a bearer token (a "bearer") can use it to get access to the associated resources (without demonstrating possession of a cryptographic key). To prevent misuse, bearer tokens need to be protected from disclosure in storage and in transport.

"OpenID Connect Core 1.0 incorporating errata set 1" as published by The OpenID Foundation as of 08.11.2014 describes a simple identity layer. It enables Clients to verify the identity of the End-User based on the authentication performed by an Authorization Server, as well as to obtain basic profile information about the End-User in an interoperable and REST-like manner. It defines the core OpenID Connect functionality: authentication built on top of OAuth 2.0 and the use of Claims to communicate information about the End-User. It also describes the security and privacy considerations for using OpenID Connect.

In particular, if a mechanism of using a certain token is to be migrated to a mechanism of using another token, using tokens according to one standardized mechanism may not be compatible with the other standardized mechanism. In other words, token providers may not manage tokens in an overarching manner. However, this may be required when migrating from one mechanism of a token to another to avoid a downtime of a service to be accessed and/or a logout of the user to be authenticated.

In the light of the prior art, the object of the present disclosure is to provide a contribution to the prior art. In particular, it is an object of the disclosure to provide an effective interoperability between token providers.

The object is solved by the features of the independent claim. The dependent claims relate to further embodiments of the disclosure.

According to an aspect of the present disclosure a method for a server for managing authentication related tokens for a personalized service of a vehicle is provided. Therein, the method comprises: receiving, from a vehicle-specific gateway with a first request management component and with a second request management component each for managing a vehicle request with a token, a token relating to the vehicle and according to a first token type or according to a second token type; identifying, by a token identifier of an API gateway of the server, a token type of the token as being the first token type or the second token type; and transmitting, from the token identifier, an access information relating to access to the service to a first data management backend or to a second data management backend, based on the token type of the token.

Therein, access to the personalized service may be requested, by a user of the vehicle, a user group, a user device related to the vehicle and/or an application that may relate to the vehicle, with the vehicle request that comprises the token of either the first token type or the second token type. The token may comprise an access token, a refresh token and/or a combination of an access token and a refresh token.

The gateway may transmit such a request to the server and may be adapted to manage the token either being of the first token type or of the second token type by the first request management component or the second request management component, respectively. The gateway may be adapted to address the token identifier of the server, either via the first request management component or via the second request management component, depending on the vehicle request.

The token identifier may be adapted to identify a token type of the token as being the first token type or the second token type. The token identifier may be comprised by the API gateway (application programming interface gateway) which may provide, i.e., grant, or deny access to the service.

Based on the token type, the token identifier and/or the API gateway may transmit the access information to the first data management backend or to the second data management backend. Therein, the access information relates to the access to the service, e.g., to the validity or invalidity of the token. Therein, the access information may be transmitted to the first data management backend if the token is of the first token type, or otherwise, the access information may be transmitted to the second data management backend if the token is of the second token type.

The method enables the server to handle different types of tokens and may thus achieve an interoperability between different token providers, wherein, e.g., a first token provider may provide a token with the first token type and a second token provider may provide a token with the second token type. By enabling the interoperability, the server is enabled to handle tokens of different types at the same time. This may enhance the compatibility of the server to handle personalized services and/or requests thereto. Further, this may achieve an opportunity to migrate access management functions based on one type of tokens to another type of tokens.

Optionally, the token type of the token is identified to be of the first token type, and the method comprises: refreshing, by the first data management backend, the token. This may enable an efficient handling of a token of the first token type. Therein, refreshing may relate to an extension of a validity period and/or time frame of the token. Therein, the token may comprise a refresh token for performing refreshing the token.

Optionally, the token type of the token is identified to be of the second token type, and the method comprises: transmitting, by the first data management backend, a validity request to the second data management backend; receiving, by the first data management backend, a validity response from the second data management backend; and creating, by the first data management backend, a replacement token based on the token, on the token being of the first token type. This may enable a migration of handling tokens of the second token type to handling tokens of the first token type. In this case, the first data management backend assesses the validity of the token by sending the validity request and receiving the validity response. The second data management backend may be adapted to assess the validity of the second token type and to provide a corresponding validity response. If the token is valid, the first data management backend may create the replacement token based on the token and on being of the first token type. Thus, the replacement token may mirror features of the token, but the replacement token is of the first token type whereas the token is of the second token type. Thus, the replacement token may be considered as a migrated token. If the token is not valid and/or lapsed, creating the replacement token may be dispensed with.

Optionally, the server comprises a secure access network; and the secure access network comprises the second data management backend and a data management proxy for access to the service by routing service-related access information to the API gateway. The second data management backend may be assessed by services which may require the second token type for authentication. However, the API gateway may be adapted to grant access to the service by a vehicle request with a token of the first token type. By providing the data management proxy, the services which may require the second token type may be validly requested by a token of the second token type, since the API gateway may be adapted to grant access based on the service-related access information from the second data management backend via the data management proxy.

Optionally, the second request management component comprises a network load balancing component, and the token is received by the token identifier from the network load balancing component. This may enable an efficient handling of a token of the second token type.

Optionally, the server comprises a cloud component with a firewall for controlling access of the service to the API gateway. The firewall may effectively control an interaction with services, optionally from outside the server and/or from a secure access network of the server, and the API gateway.

According to an aspect of the disclosure, a computer program is provided. The computer program comprises instructions which, when the program is executed by a processor, causes the processor to carry out the above-described method. Optionally, computer program comprises instructions which, when the program is executed by a processor, causes the processor to realize one or more optional features relating to the above-described method to achieve a technical effect corresponding therewith.

According to an aspect of the disclosure, a server for managing authentication related tokens for a personalized service of a vehicle is provided. Therein, the server is adapted to carry out the method as described above. Optionally, the server is adapted to realize one or more optional features relating to the above-described method to achieve a technical effect corresponding therewith.

In other words, the above may be summarized in relation to a non-limiting example as follows: the disclosure relates to token provider system interoperability. The background is that there is a technical aim for unifying an architecture for digital user services of a vehicle, an application and/or the web. OAuth tokens and OpenID tokens are known. In the prior art, different token providers may not manage tokens over system-related boundaries in a standardized manner. However, this may be required, e.g., for migration between using different types of tokens. The disclosure achieves that tokens of a first provider may be stored and transposed into a token of a second provider. Further, by importing tokens of the system to be migrated from to the system to be migrated at, a downtime and/or logout during migration may be prevented.

An embodiment according to an aspect of the present disclosure is described with reference to the Figures below.
- Fig. 1: shows a schematic of an architecture with a server according to an embodiment of the disclosure;
- Fig. 2: shows a second schematic of an architecture with a server according to an embodiment of the disclosure; and
- Fig. 3: shows a schematic chart illustrating a method according to an embodiment of the disclosure.

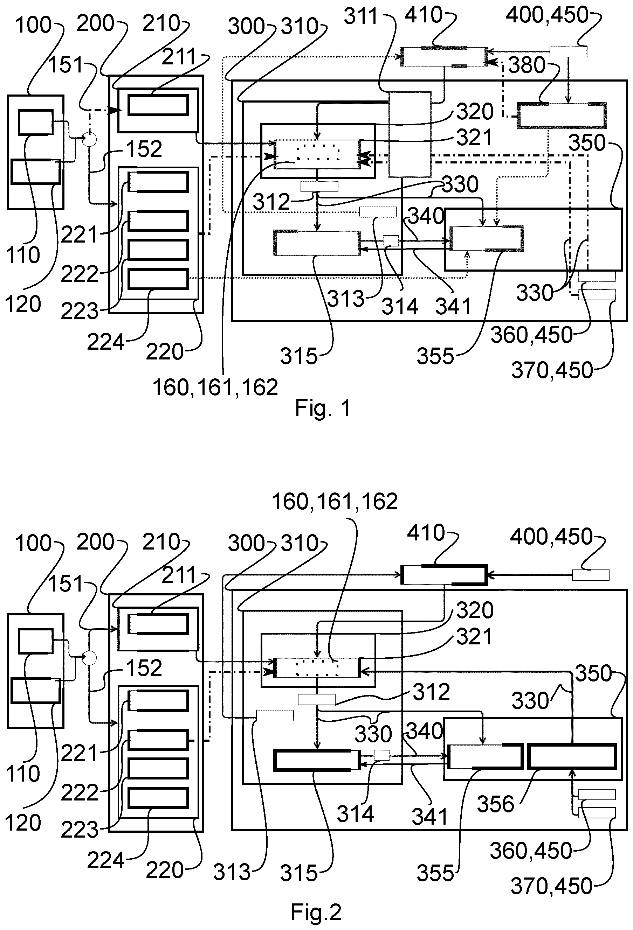

In the following embodiments are described with reference to Figures 1 to 3, wherein the same reference signs are used for the same objects throughout the description of the Figures and wherein the embodiment is just one specific example for implementing the disclosure and does not limit the scope of the disclosure as defined by the claims.

Figure 1 shows a schematic of an architecture with a server 300 according to an embodiment of the disclosure. Therein, links as being represented by arrows between components as being represented by boxes relate to information that may be communicated between the components. An arrow with a dotted line indicates links which may be dispensed with, e.g., after a migration from using a second token type 162 to using a first token type 161. An arrow with a dash-dotted line may indicate inter alia what may distinguish the architecture according to the embodiment over the prior art in a non-limiting manner.

In Figure 1, the server 300 is connected via a gateway 200 to a vehicle 100.

The vehicle 100 comprises a user frontend 110, e.g., an in-car store, and a personalization framework 120. A user of the vehicle 100 may use the user frontend 110 to request, e.g., to activate and/or to buy, a personalized service 450 of the vehicle 100. The user may use the personalization framework 120 to perform a personalization of the vehicle 100 and/or of a function thereof by a personalized service 450. Such a personalized service 450 may relate to a charging management component 360 for managing electrically charging an electric energy storage of the vehicle 110, to a parking management component 370 for managing parking the vehicle 100, and/or to a user application 400 that relates to the vehicle 100 and/or to a function thereof.

According to the personalized service 450, the vehicle 100 is adapted to transmit a vehicle request 151, 152 with a token to the gateway 200 for requesting the service 450. The vehicle request 151, 152 is transmitted according to a transport layer security (TLS) protocol, e.g., a mutual transport layer security (mTLS) authentication, from the vehicle 100 to the gateway 200.

The gateway 200 is vehicle-specific. E.g., the gateway 200 may only be reached by specific vehicles 100, e.g., vehicles 100 from a specific manufacturer, with specific control devices and/or with a specific feature and/or authorization. The gateway 200 may not be reached by devices other than vehicles 100.

The gateway 200 comprises a first request management component 210 and a second request management component 220 each for managing the vehicle request 151, 152 with the token.

The first request management component 210 may be a cloud-based application delivery controller. The first request management component 210 is adapted to enable an end-to-end communication between the vehicle 100 and the server 300, provided the token is of the first token type 161. For this reason, the first request management component 210 comprises a global customer data management component 211. The first token type 161 may characterize the token as being a global customer data management (GCDM) token which is handled by the global customer data management component 211.

The second request management component 220 may be a cloud-based application delivery controller. The second request management component 220 is adapted to enable an end-to-end communication between the vehicle 100 and the server 300, provided the token is of the second token type 162. For this reason, the second request management component 220 comprises a customer authentication component 221. The second token type 161 may characterize the token as being a customer authentication component (CAC) token which is handled by the customer authentication component 221. The second request management component 220 further comprises a network load balancing component 222, a second network load balancing component 223 and an application delivery controller 224. The network load balancing component 222, the second network load balancing component 223 and the application delivery controller 224 may be referred to as a legacy adapter component which links the gateway to an on-premise cloud via a second data management backend 355 of the server 300 (see below). The network load balancing component 222 is adapted to transmit information to the second data management backend 355 and/or a token identifier 321 (see below).

The server 300 may relate to an intranet cooperate network of the manufacturer and/or service provider of the vehicle 100. The server 300 is adapted to be addressed by the vehicle 100 via the gateway 200. The server 300 is adapted to control access to the services 450, based on the vehicle request 151, 152 and in particular on the token of the vehicle request 151, 152 and/or the validity of the token.

The server 300 comprises a cloud component 310, a firewall 311, a personalization backend 313 and a secure access network 350. The secure access network 350 comprises a second data management backend 355.

The cloud component 310 may be hosted physically separate from the server 300. The cloud component 310 comprises an API gateway 320 and a first data management backend 315.

The API gateway 321 comprises a token identifier 321. The token identifier 321 is adapted to assess the token type 160 of the token and to enable a validity assessment of the token. The token identifier 321 is adapted to identify a token type 160 of the token as being the first token type 161 or the second token type 162. The token identifier 321 is adapted to transmit an access information 330 relating to access to the service 450 to the first data management backend 315 or to the second data management backend 355, based on the token type 160 of the token. The cloud component 310 performs a migration load balancing 312 to transmit the access information 330 to the first data management backend 315 or to the second data management backend 355.

If the token type 160 is the first token type 161 the access information 330 is transmitted to the first data management backend 315. The first data management backend 315 is adapted to assess the validity of the token being of the first token type 161. The first data management backend 315 may thus also referred to as GCDM backend. The first data management backend 315 is adapted to refresh the token by a token refresh 314.

If the token type 160 of the token is identified to be of the second token type 161, the access information 330 is transmitted to the first data management backend 315 and to the second data management backend 355. The first data management backend 315 is adapted to transmit a validity request 340 to the second data management backend 355 and to receive a validity response 341 from the second data management backend 355. The second data management backend 355 is adapted to assess the validity of the token being of the second token type 162. The second data management backend 355 may thus also referred to as CAC backend.

The first data management backend 315 is adapted to create a replacement token based on the token, on the token being of the first token type 161 and on the validity response 341. I.e., if the token type 160 is the second token type 162 and the underlying token is valid, the first data management backend 315 creates the replacement token being of the first token type 161. Thus, a token of the second token type 162 leads to the creation of the replacement token of the first token type 161. This enables a migration from the second token type 162 to the architecture of Figure 1 with the first token type 161.

The firewall 311 is adapted to control access of components external to the cloud component 310 to the cloud component 310, to the API gateway 320 and/or to the token identifier 321. The firewall 311 may be adapted to limit access to a specific range of IP addresses.

For example, the services 450 are adapted to transmit a service-related access information 330 to the token identifier 321. The service-related access information 330 comprises information relating to the access to the respective service 450. The service-related access information 330 have to pass the firewall 311 to reach the token identifier 321. The services 450 may be requested by a vehicle request 151, 152 using an authentication with a token of the second token type 162. The services 450 then provides the service-related access information 330 to the token identifier 321 so that a replacement token to access the services 450 may be provided as described above.

A data management server 410 is connected to the server 300. The data management server 410 is adapted to receive information from the personalization backend 313 and from a vehicle-specific service 250, namely from the user application 400 that relates to the vehicle 100 and/or to a function thereof.

The server 300 is adapted to perform a backend for frontend scheme 380 which receives information relating to a frontend of the user application 400, and communicates information relating to a backend of the user application 400 to the data management server 410. The data management server 410 is adapted to process the received information and to communicate with the token identifier 321. The data management server 410 is adapted to be assessed by requests with a token of the first token type 161.

Figure 2 shows a second schematic of an architecture with a server 300 according to an embodiment of the disclosure. Figure 2 is described under reference to Figure 1. Therein, differences between the architectures of Figures 1 and 2 are described.

In Figure 2, the token from the vehicle request 151, 152 is received by the token identifier 321 from the network load balancing component 223.

The secure access network 350 comprises a data management proxy 356. The data management proxy 356 is adapted to route service-related access information 330 to the API gateway 320 for access to the service 450. Such a service-related access information 330 relates to one of the services 450. The service-related access information 330 comprises information relating to the access to the respective service 450.

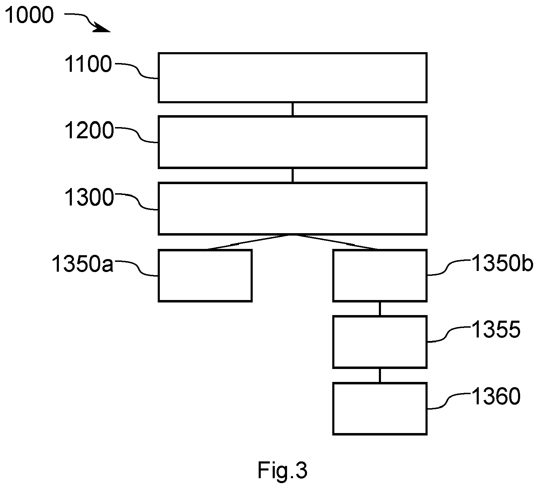

Figure 3 shows a schematic chart illustrating a method 1000 according to an embodiment of the disclosure. The method 1000 of Figure 3 is a method 1000 for a server 300 for managing authentication related tokens for a personalized service 450 of a vehicle 100. Such a server 300 is described with reference to Figures 1 and 2. Figure 3 is described under reference to Figures 1 and 2.

The method 1000 of Figure 3 comprises: receiving 1100, from a vehicle-specific gateway 200 with a first request management component 210 and with a second request management component 220 each for managing a vehicle request 151, 152 with a token, a token relating to the vehicle 100 and according to a first token type 161 or according to a second token type 162. The second request management component 220 comprises a network load balancing component 223, and the token is received by the token identifier 321 from the network load balancing component 223.

The method 1000 comprises: identifying 1200, by a token identifier 321 of an API gateway 320 of the server 300, a token type 160 of the token as being the first token type 161 or the second token type 162.

The method 1000 comprises: transmitting 1300, from the token identifier 321, an access information 330 relating to access to the service 450 to a first data management backend 315 or to a second data management backend 355, based on the token type 160 of the token.

If the token type 160 of the token is identified to be of the first token type 161, the method 1000 comprises: refreshing 1350a, by the first data management backend 315, the token.

If the token type 160 of the token is identified to be of the second token type 161, the method 1000 comprises: transmitting 1350b, by the first data management backend 315, a validity request 340 to the second data management backend 355; receiving 1355, by the first data management backend 315, a validity response 341 from the second data management backend 355; and creating 1360, by the first data management backend 315, a replacement token based on the token, on the token being of the first token type 161 and on the validity response 341.

The server 300 comprises a secure access network 350, and the secure access network 350 comprises the second data management backend 355 and a data management proxy 356 for access to the service 450 by routing service-related access information 330 to the API gateway 320.

### List of reference signs (part of the description)

- 100: vehicle
- 110: user frontend
- 120: personalization framework
- 151: vehicle request
- 152: vehicle request
- 160: token type
- 161: first token type
- 162: second token type
- 200: gateway
- 210: first request management component
- 211: global customer data management component
- 220: second request management component
- 221: customer authentication component
- 222: network load balancing component
- 223: second network load balancing component
- 224: application delivery controller

- 300: server
- 310: cloud component
- 311: firewall
- 312: migration load balancing
- 313: personalization backend
- 314: token refresh
- 315: first data management backend
- 320: API gateway
- 321: token identifier
- 330: access information
- 340: validity request
- 341: validity response

- 350: secure access network
- 355: second data management backend
- 356: data management proxy
- 360: charging management component
- 370: parking management component
- 380: backend for frontend scheme
- 400: user application
- 410: data management server
- 450: service

- 1000: method
- 1100: receiving
- 1200: identifying
- 1300: transmitting
- 1350a: refreshing
- 1350b: transmitting
- 1355: receiving
- 1360: creating

## Claims

1. Method (1000) for a server (300) for managing authentication related tokens for a personalized service (450) of a vehicle (100), wherein the method (1000) comprises:
- receiving (1100), from a vehicle-specific gateway (200) with a first request management component (210) and with a second request management component (220) each for managing a vehicle request (151, 152) with a token, a token relating to the vehicle (100) and according to a first token type (161) or according to a second token type (162);
- identifying (1200), by a token identifier (321) of an API gateway (320) of the server (300), a token type (160) of the token as being the first token type (161) or the second token type (162); and
- transmitting (1300), from the token identifier (321), an access information (330) relating to access to the service (450) to a first data management backend (315) or to a second data management backend (355), based on the token type (160) of the token.

2. Method (1000) according to claim 1, wherein the token type (160) of the token is identified to be of the first token type (161), and the method (1000) comprises:
- refreshing (1350a), by the first data management backend (315), the token.

3. Method (1000) according to claim 1, wherein the token type (160) of the token is identified to be of the second token type (161), and the method (1000) comprises:
- transmitting (1350b), by the first data management backend (315), a validity request (340) to the second data management backend (355);
- receiving (1355), by the first data management backend (315), a validity response (341) from the second data management backend (355); and
- creating (1360), by the first data management backend (315), a replacement token based on the token, on the token being of the first token type (161) and on the validity response (341).

4. Method (1000) according to any one of the preceding claims, wherein
- the server (300) comprises a secure access network (350); and
- the secure access network (350) comprises the second data management backend (355) and a data management proxy (356) for access to the service (450) by routing service-related access information (330) to the API gateway (320).

5. Method (1000) according to any one of the preceding claims, wherein the second request management component (220) comprises a network load balancing component (223), and the token is received by the token identifier (321) from the network load balancing component (223).

6. Method (1000) according to any one of the preceding claims, wherein the server (300) comprises a cloud component (310) with a firewall (311) for controlling access of the service (450) to the API gateway (320).

7. Computer program, comprising instructions which, when the program is executed by a processor, causes the processor to carry out the method (1000) as claimed in any one of the preceding claims.

8. Server (300) for managing authentication related tokens for a personalized service (450) of a vehicle (100), wherein the server (300) is adapted to carry out the method (1000) as claimed in any one of the claims 1 to 6.
